**Europäisches Patentamt**

**European Patent Office**

**Office européen des brevets**

(19)

(11) Veröffentlichungsnummer: **0 163 807**
**B1**

(12) # EUROPÄISCHE PATENTSCHRIFT

(45) Veröffentlichungstag der Patentschrift:
08.03.89

(21) Anmeldenummer: 85100987.8

(22) Anmeldetag: 31.01.85

(51) Int. Cl.⁴: **H 04 N 7/087,** H 04 N 5/91

(54) Videoheimanlage mit einem Videotextdecoder.

(30) Priorität: 10.05.84 DE 3417276

(43) Veröffentlichungstag der Anmeldung:
11.12.85 Patentblatt 85/50

(45) Bekanntmachung des Hinweises auf die Patenterteilung:
08.03.89 Patentblatt 89/10

(84) Benannte Vertragsstaaten:
AT FR GB IT

(56) Entgegenhaltungen:
EP-A-0 123 959

GRUNDIG TECHNISCHE INFORMATIONEN, Band
27, Nr. 4/5, 1980, Fürth; P. HEIDER et al. "Videotext
und Bildschirmtext", Seiten 171-196
I.E.E. PROCEEDINGS SECTION AA1, Band 129, Nr.
7, Teil A, September 1982, Old Woking, Surrey, GB;
J.C. MACKELLAR "Television receiver design",
Seiten 493-506

(73) Patentinhaber: GRUNDIG E.M.V. Elektro-
Mechanische Versuchsanstalt Max Grundig
holländ. Stiftung & Co. KG., Kurgartenstrasse
37, D-8510 Fürth/Bay. (DE)

(72) Erfinder: Heider, Peter, Dipl. Ing., Hasenlauf 8,
D-8800 Ansbach (DE)

(74) Vertreter: Kolb, Max, Kurgartenstrasse 37, D-8510
Fuerth/Bayern (DE)

## Beschreibung

Die vorliegende Erfindung betrifft eine Videoheimanlage mit einem Fernsehempfänger, einen an die AV-Buchse des Fernsehempfängers anschließbaren Videorecorder und einen mit dem Fernsehempfänger verbundenen Videotextdecoder, dem vom Fernsehempfänger das FBAS-Signal, das die codierten Videotext-Signale enthält, und mindestens eine Versorgungsspannung zugeführt werden.

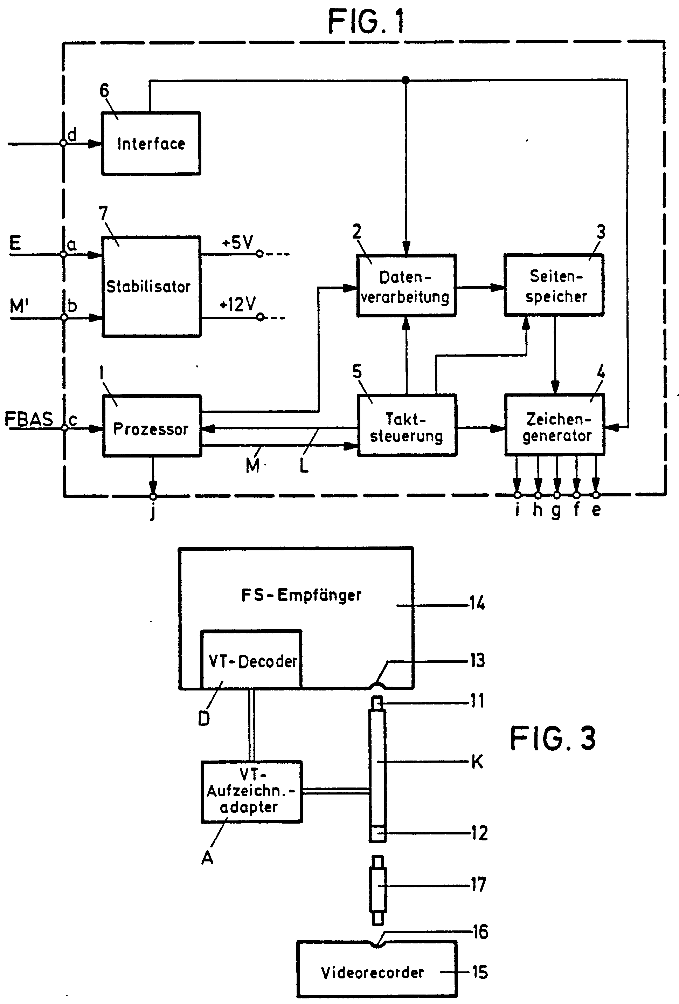

Ein Videotextdecoder der im Oberbegriff des Anspruchs 1 genannten Art ist beispielsweise aus der Zeitschrift "GRUNDIG Technische Informationen", 4/5-1980, Seite 171 - 196, bekannt. Da der Aufbau und die Funktionsweise des bekannten Videotextdecoders für die vorliegende Erfindung von Bedeutung sind, wird dieser zunächst mit Hilfe der Fig. 1 näher erläutert.

Der in Figur 1 dargestellte Videotextdecoder besteht im wesentlichen aus einem Videoprozessor 1, einer Datenverarbeitungsschaltung 2, einem Seitenspeicher 3, einem Zeichengenerator 4, einer Taktsteuerung 5, einem Videotext-Fernsteuer-Interface 6 und einem Spannungsstabilisator 7.

Zur Versorgung benötigt der bekannte Videotextdecoder zwei Spannungen (12 V für den Videoprozessor und 5 V für die weiteren Schaltkreise), die aus Spannungen E und M' abgeleitet werden, die im Fernsehempfänger vorhanden sind, und das FBAS-Signal, das die codierten Videotextsignale enthält und üblicherweise am ZF-Verstärker des Fernsehempfängers abgenommen wird. Diese Signale liegen an den Eingängen a und b bzw. c des Videotextdecoders an.

Ferner erhält der Videotextdecoder über seinen Eingang d Signale von einem nicht gezeichneten Fernsteuerempfänger zugeführt, die charakteristisch für die eingegebenen Bedienbefehle sind. Diese Signale werden im Videotext-Fernsteuer-Interface 6 für die weiteren Schaltungen des Videotextdecoders aufbereitet.

Das dem Eingang c zugeführte FBAS-Signal gelangt an einen Videoprozessor 1, in dem die digitalen Textsignale abgetrennt und zur Datenverarbeitungsschaltung 2 weitergegeben werden.

Die Datenverarbeitungsschaltung 2 unterzieht die seriell ankommenden Daten einer Paritäts- und Hammingcode-Prüfung, wandelt sie in parallele Datenwörter um und leitet diese parallelen Datenwörter an den Seitenspeicher 3 weiter.

Die im Seitenspeicher 3 gespeicherten Datenworte werden schließlich einem Zeichengenerator 4 zugeführt, der die Aufgabe hat, die ihm zugeführten Datenwörter als Schrift- oder Grafikzeichen auf dem Bildschirm des Fernsehempfängers darzustellen.

Zur Steuerung des gesamten Zeitablaufes ist eine Schaltung 5 zur Taktsteuerung vorgesehen, die über die Leitung M mit dem FBAS-Signal synchronisiert wird und unter anderem an den Videoprozessor 1 ein vollständiges und normgerechtes Synchronsignal liefert.

Die dem Videotextdecoder über seine Eingänge a und b zugeführten Spannungen werden in einem Spannungsstabilisator 7 stabilisiert. Mit den an den Ausgängen des Spannungsstabilisators 7 erhaltenen Spannungen, die beispielsweise + 5 V und + 12 V betragen, werden die einzelnen Schaltungsteile des Videotextdecoders versorgt.

Über die Ausgänge e, f, und g des Videotextdecoders (RGB-Ausgänge) gelangen die aus dem Speicher des Zeichengenerators ausgelesenen Zeichen zum RGB-Baustein des angeschlossenen Farbfernsehempfängers, dem über den Ausgang h des Videotextdecoders weiterhin ein Blanking- oder Bildaustastsignal zur Austastung des hinter dem darzustellenden Videotext gelegenen Bilderszenenabschnittes zugeführt wird. Ferner kann am Zeichengenerator 4 ein Videotext-Luminanzsignal abgenommen werden, welches am Ausgang i zur Verfügung steht. Über den Ausgang j des Videotextdecoders erfolgt die Synchronisierung des Fernsehempfängers. Bei Videotextbetrieb gibt der Videoprozessor 1 an den Ausgang j des Videotextdecoders das von der Taktsteuerung 5 erzeugte und dem Videoprozessor 1 über die Leitung L zugeführte normgerechte Synchronsignal ab.

Weitere Einzelheiten über den bekannten Videotextdecoder können der eingangs genannten Literaturstelle entnommen werden.

Ferner ist in der älteren europäischen Patentanmeldung EP-A-123 959 ein Videorecorder mit Aufzeichnung eines Videotext-Signals beschrieben. Bei diesem Videorecorder wird das empfangene Videotext-Signal unmittelbar anstelle des Bildträgers aufgezeichnet.

Der vorliegenden Erfindung liegt die Aufgabe zugrunde, eine Videoheimanlage mit Fernsehempfänger, einem Videorecorder und einem Videotextdecoder der im Oberbegriff des Anspruchs 1 angegebenen Art so weiterzubilden, daß auf möglichst einfache und billige Art und Weise und ohne Eingriffe in den Fernsehempfänger selbst eine Aufzeichnung der Videotextsignale, insbesondere synchron mit den Fernsehsignalen, auf einem Heimvideorecorder möglich wird, dessen Aufzeichnungsbandbreite für die Aufzeichnung der Original-Videotextinformation nicht ausreichend und dessen Wiedergabesignal mit einem Zeitfehler behaftet ist.

Diese Aufgabe wird durch die im Kennzeichen des Patentanspruchs 1 angegebenen Maßnahmen gelöst. Vorteilhafte Weiterbildungen ergeben sich aus den Unteransprüchen.

Die Vorteile der Erfindung liegen insbesondere darin, daß die vorliegende Schaltung nur mit dem Videotextdecoder verbunden werden muß und sonst keine Lötverbindungen zum TV-Chassis notwendig sind. Dies schafft eine einfache und preiswerte Möglichkeit, Videotextsignale synchron mit dem Fernsehsignal auf einem Heimvideorecorder aufzuzeichnen, obwohl dessen Aufzeichnungsbandbreite für die Aufzeichnung der Original-Videotextinformation nicht ausreichend und dessen Wiedergabesignal mit einem Zeitfehler behaftet ist.

Mit Hilfe der vorliegenden Erfindung können beispielsweise Gehörgeschädigte Videotext-Untertitel auf Magnetband aufzeichnen.

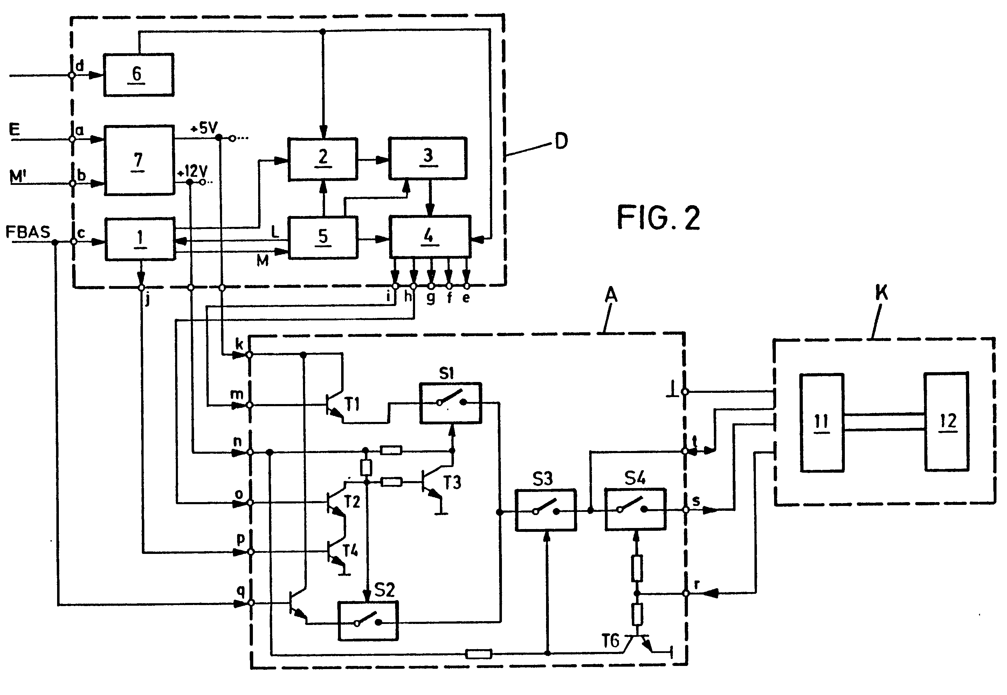

Weitere Vorteil und Eigenschaften ergeben sich aus einem Ausführungsbeispiel, das im folgenden mit Hilfe der Figur 2 näher erläutert wird.

Der obere Teil von Figur 2 enthält den bereits in Figur 1 beschriebenen bekannten Videotextdecoder, bestehend aus einem Videoprozessor 1, einer Datenverarbeitungsschaltung 2, einem Seitenspeicher 3, einem Zeichengenerator 4, einer Taktsteuerung 5, einem Videotext-Fernsteuer-Interface 6 und einem Spannungsstabilisator 7.

An diesen bekannten Videotextdecoder wird in der in Figur 2 gezeigten Weise der Videotext-Aufzeichnungsadapter angeschlossen. Die Eingänge dieses Videotext-Aufzeichnungsadapters sind mit k, m, n, o, p, q, und r, und die Ausgänge mit s und t bezeichnet, wobei der Ausgang t in einer bestimmten Betriebsart auch als Eingang verwendet wird, wie später noch erläutert wird.

Die Eingänge k und n des Videotext-Aufzeichnungsadapters dienen als Versorgungseingänge. Ihnen werden die im Spannungsstabilisator 7 des Videotextdecoders erzeugten Spannungen von 5 V und 12 V zugeführt.

Am Eingang m des Videotext-Aufzeichnungsadapters liegt das im Zeichengenerator 4 des Videotextdecoders erzeugte und am Ausgang i des Videotextdecoders abgreifbare Videotext-Luminanzsignal an.

Der Eingang o des Videotext-Aufzeichnungsadapters ist mit dem Ausgang h des Videotextdecoders verbunden, so daß dem Videotext-Aufzeichnungsadapter über seinen Eingang o das vom Zeichengenerator 4 ausgegebene Blanking- oder Bildaustastsignal zugeführt wird, welches im Videotextaufzeichnungsadapter als Umschaltsignal für die Eintastung des decodierten Videotextsignals in das am Eingang q des Videotext-Aufzeichnungsadapters anliegende FBAS-Signal verwendet wird.

Weiterhin weist der Videotext-Aufzeichnungsadapter einen Eingang p auf, an dem das in der Taktsteuerung 5 erzeugte, über die Leitung L an den Videoprozessor weitergegebene und am Ausgang j des Videotextdecoders abgreifbare Synchrongemisch anliegt. Dieses Synchrongemisch wird bei Vollbildtext-Aufzeichnung verwendet, d. h., wenn das gesamte Bild ausgetastet und nur Text auf dem Recorder aufgezeichnet werden soll.

Schließlich benötigt der Videotext-Aufzeichnungsadapter noch die im Heimvideorecorder erzeugte Schalt-Spannung, die bei der Betriebsart "Aufzeichnung" 0 V und bei der Betriebsart "Wiedergabe" 12 V beträgt, und an Pin 1 der AV-Buchse 12 des AV-Kupplungsteils K abgenommen werden kann und allgemein als AV-Schaltspannung bezeichnet wird. AV steht dabei für Audio-Video, weil über die AV-Buchse das Audio-und Videosignal ein- und ausgekoppelt wird.

Ferner hat der Videotext-Aufzeichnungsadapter einen Ausgang s für die Bildschirmwiedergabe und einen Ausgang t für die Aufzeichnung des Signals auf dem angeschlossenen Heimvideorecorder, wobei der Ausgang t bei der Wiedergabe als Eingang für das vom Heimvideorecorder kommende Signal verwendet wird.

Bei normalem FBAS-Signal befindet sich der Pegel des Umschaltsignals, das dem Videotext-Aufzeichnungsadapter über seinen Anschluß o zugeführt wird, auf "LOW". Dies bewirkt ein Sperren des Transistors T2 und ein Leiten des Transistors T3. Als Folge davon wird der Schalter S2 geschlossen und der Schalter S1 geöffnet. Diese Schalter dienen der schnellen Signalumschaltung (FBAS-Videotext) innerhalb des Fernsehrasters. Also kann das am Eingang q anliegende FBAS-Signal über die geschlossenen Schalter S2 und S3 (S3 ist im Aufzeichnungsbetrieb ständig geschlossen) über den Ausgang t des Videotext-Aufzeichnungsadapters an den Heimvideorecorder weitergegeben werden. Der Schalter S4 ist bei Aufzeichnungsbetrieb geöffnet, bei Wiedergabebetrieb geschlossen.

Beim Vorliegen eines Videotextsignals befindet sich der Pegel des am Anschluß o anliegenden Umschalt-Signals auf "HIGH". Dies bewirkt ein Leiten des Transistors T2 und ein Sperren des Transistors T3. Als Folge davon wird der Schalter S1 geschlossen und der Schalter S2 geöffnet. Also kann das am Eingang m anliegende decodierte Textsignal über die geschlossenen Schalter S1 und S3 über den Ausgang t des Videotext-Aufzeichnungsadapters an das Aufzeichnungsgerät weitergegeben werden.

Insgesamt gesehen findet also eine Eintastung des decodierten Videotextsignals in das am Eingang q des Videotext-Aufzeichnungsadapters anliegende FBAS-Signal statt, so daß das decodierte Videotextsignal synchron mit dem FBAS-Signal auf dem Heimvideorecorder aufgezeichnet wird.

Beim Wiedergabevorgang liegt am Eingang r eine AV-Schaltspannung von 12 V an. Dies bewirkt ein Leiten des Transistors T6 und ein Schließen des Schalters S4. Bei leitendem Transistor T6 liegt der Steuereingang des Schalters S3 über die Kollektor-Emitter-Strecke des Transistors T6 an Masse, so daß der Schalter S3 geöffnet ist. Also kann beim Wiedergabevorgang das vom Heimvideorecorder kommende, am Eingang t des Videotext-Aufzeichnungsadapters anliegende Signal über den Schalter S4 und den Ausgang s an den Farbdecoder des Fernsehempfängers weitergegeben und über die RGB-Endstufe auf dem Bildschirm dargestellt werden.

Bei Vollbildtext-Aufzeichnung, d. h., wenn das gesamte Bild ausgetastet und nur Videotext aufgezeichnet werden soll, hat das dem Eingang o des Videotext-Aufzeichnungsadapters zugeführte Bildaustast- bzw. Umschaltsignal den Pegel "HIGH", so daß der Transistor T2 ständig leitet. Das am Eingang p des Videotext-Aufzeichnungsadapters anliegende Synchrongemisch kann dann über die Transistoren T4, T2 und T3 dem Schalter S1 zugeführt werden.

Die Figur 3 zeigt ein Beispiel dafür, wie das in Figur 2 gezeigte AV-Kupplungsteil K, über das die Ausgangssignale des Videotext-Aufzeichnungsadapters A dem Videorecorder 15 zugeführt werden, in der Videoleitung 17 zwischen der AV-Buchse 13 des Fernsehempfängers 14 und der AV-Buchse 16 des Videorecorders 15 angeordnet sein kann. Mit 11 ist der AV-Stecker des AV-Kupplungsteils K bezeichnet, der in die AV-Buchse 13 des Fernsehempfängers eingesteckt wird. Der Videorecorder 15 ist über die Videoleitung 17 an die AV-Buchse 12 des AV-Kupplungsteils K angeschlossen.

Eine vorteilhafte Weiterbildung der Erfindung besteht darin, den Videotext-Aufzeichnungsadapter und das AV-Kupplungsteil zu einer baulichen Einheit zu verbinden, die als Zusatzbauteil nur an den Videotextdecoder des Fernsehempfängers angeschlossen werden braucht.

Eine weitere vorteilhafte Weiterbildung besteht darin, daß die Schalter S1 und S2 zu einem einzigen Schalter zusammengefaßt sind.

**Patentansprüche**

1. Videoheimanlage mit einem Fernsehempfänger (14), einem an der AV-Buchse (13) des Fernsehempfängers anschließbaren Videorecorder (15) und einem mit dem Fernsehempfänger verbundenen Videotextdecoder (D), dem vom Fernsehempfänger das FBAS-Signal das die codierten Videotext-Signale enthält, und mindestens eine Versorgungsspannung zugeführt werden, dadurch gekennzeichnet, daß das Ausgangssignal des Videotextdecoders (D), das zumindest das decodierte Videotext-Signal enthält, und das FBAS-Signal einem Videotext-Aufzeichnungsadapter (A) zugeführt ist, mit welchem das decodierte Videotext-Signal in das FBAS-Signal eingetastet wird, daß das Ausgangssignal des Videotext-Aufzeichnungsadapters (A) der AV-Buchse (12) eines AV-Kupplungsteils (K) zugeleitet ist, das über seinen AV-Stecker (11) mit der AV-Buchse (13) des Fernsehehempfängers (14) verbunden ist, und daß der Videorecorder (15) an die AV-Buchse (12) des AV-Kupplungsteils (K) angeschlossen ist.

2. Videoheimanlage nach Anspruch 1, dadurch gekennzeichnet, daß dem Videotext-Aufzeichnungsadapter (A) neben dem decodierten Videotext-Signal und dem FBAS-Signal eine oder mehrere Versorgungsspannungen, das zur Austastung des hinter dem darzustellenden Videotext gelegenen Bilderszenenabschnittes erforderliche Bildaustastsignal, und das zur Darstellung von Vollbildtext notwendige Synchronsignalgemisch aus dem Videotextdecoder zugeführt werden.

3. Videoheimanlage nach Anspruch 1 oder 2, dadurch gekennzeichnet, daß dem Videotext-Aufzeichnungsadapter (A) die im Videorecorder erzeugte AV-Schaltspannung zur Umschaltung vom Aufzeichnungs- in den Wiedergabebetrieb und umgekehrt über das AV-Kupplungsteil (K) zugeführt wird.

4. Videoheimanlage nach einem oder mehreren der vorhergehenden Ansprüche, dadurch gekennzeichnet, daß der Videotext-Aufzeichnungsadapter (A) mindestens einen vom Bildaustastsignal und vom Synchronsignalgemisch gesteuerten Schalter (S1) enthält, über den die Videotext-Information oder abwechselnd die Videotext-Information und das FBAS-Signal dem Videorecorder über das AV-Kupplungsteil (K) zugeführt wird.

5. Videoheimanlage nach Anspruch 4, dadurch gekennzeichnet, daß über den ersten Schalter (S1) die Videotext-Information und über einen zweiten Schalter (S2) das FBAS-Signal dem Videorecorder über das AV-Kupplungsteil (K) zugeführt werden, wobei der zweite Schalter immer dann leitet, wenn der erste Schalter sperrt und umgekehrt.

6. Videoheimanlage nach einem oder mehreren der Ansprüche 1 bis 5, dadurch gekennzeichnet, daß der Videotext-Aufzeichnungsadapter (A) einen Schalter (S3) enthält, der bei Aufzeichnungsbetrieb leitet, bei Wiedergabebetrieb sperrt, und einen weiteren Schalter (S4) enthält, der bei Wiedergabebetrieb leitet und bei Aufzeichnungsbetrieb sperrt, wobei beide Schalter von der AV-Schaltspannung gesteuert werden.

7. Videoheimanlage nach einem oder mehreren der Ansprüche 1 bis 6, dadurch gekennzeichnet, daß der Videotext-Aufzeichnungsadapter (A) und das AV-Kupplungsteil (K) eine bauliche Einheit bilden.

**Claims**

1. Home video system comprising a television receiver (14), a video recorder (15) which can be connected to the AV socket (13) of the television receiver, and a teletext decoder (D) connected to the television receiver, which decoder is supplied with the composite colour television signal which contains the coded teletext signals and at least one supply voltage from the television receiver, characterized in that the output signal of the teletext decoder (D), which contains at least the decoded teletext signal, and the composite colour television signal is supplied to a teletext recording adaptor (A) by means of which the decoded teletext signal is keyed into the composite colour television signal, that the output signal of the teletext recording adaptor (A) is fed to the AV socket (12) of an AV coupling part (K) which is connected via its AV plug (11) to the AV socket (13) of the television receiver (14), and that the video recorder (15) is connected to the AV socket (12) of the AV coupling part (K).

2. Home video system according to Claim 1, characterized in that the teletext recording adaptor (A) is supplied, in addition to the decoded teletext signal and the composite colour television signal, with one or more supply voltages, the frame blanking signal required for blanking the image scene section located behind the teletext to be displayed, and the composite synchronization signal necessary for displaying full-frame text from the teletext decoder.

3. Home video system according to Claim 1 or 2, characterized in that the teletext recording adaptor (A) is supplied with the AV switching voltage, generated in the video recorder, for switching from recording to replay mode and conversely, via the AV coupling part (K).

4. Home video system according to one or more of the preceding claims, characterized in that the teletext recording adaptor (A) contains at least one switch (S1) which is controlled by the frame blanking signal and the composite synchronizing signal, via which the teletext information or alternating the teletext information and the composite colour television signal is supplied to the video recorder via the AV coupling part (K).

5. Home video system according to Claim 4, characterized in that the teletext information is supplied via the first switch (S1) and the composite colour television signal is supplied via a second switch (S2) to the video recorder via the AV coupling part (K), the second switch conducting whenever the first switch is cut off and conversely.

6. Home video system according to one or more of Claims 1 to 5, characterized in that the teletext recording adaptor (A) contains a switch (S3) which conducts during recording mode, is cut off during replay mode, and contains a further switch (S4) which conducts during replay mode and is cut off during recording mode, both switches being controlled by the AV switching voltage.

7. Home video system according to one or more of Claims 1 to 6, characterized in that the teletext recording adaptor (A) and the AV coupling part (K) form one constructional unit.

## Revendications

1. Installation vidéo domestique comportant un récepteur de télévision (14), un enregistreur vidéo (15) pouvant être raccordé à la prise AV (13) du récepteur de télévision, et un décodeur vidéotex (D), qui est relié au récepteur de télévision et auquel sont envoyés le signal complet d'image, transmis par le récepteur de télévision et contenant les signaux vidéotex codés, et au moins une tension d'alimentation, caractérisée en ce que le signal de sortie du décodeur vidéotex (D), qui contient au moins le signal vidéotex décodé, et le signal complet d'image sont envoyés à un adaptateur d'enregistrement vidéotex (A), à l'aide duquel le signal vidéotex décodé est introduit dans le signal complet d'image, que le signal de sortie de l'adaptateur d'enregistrement vidéotex (A) est envoyé à la prise AV (12) d'un élément de couplage AV (K), qui est relié par l'intermédiaire de son connecteur AV (11) à la prise AV (13) de l'appareil de télévision (14), et que l'enregistreur vidéo (15) est raccordé à la prise AV (12) de l'élément d'accouplement AV (K).

2. Installation vidéo domestique selon la revendication 1, caractérisée en ce qu'en plus du signal vidéotex décodé et du signal complet d'image, une ou plusieurs tensions d'alimentation, le signal de suppression d'image nécessaire pour supprimer la partie de la scène d'image située en aval de l'information vidéotex devant être représentée, et le mélange de signaux de synchronisation nécessaire pour la représentation du texte d'image complète et délivré par le décodeur vidéotex sont envoyés à l'adaptateur d'enregistrement vidéotex (A).

3. Installation vidéo domestique selon la revendication 1 ou 2, caractérisée en ce que la tension de commutation AV produite dans l'enregistreur vidéo et servant à réaliser la commutation du fonctionnement d'enregistrement au fonctionnement de reproduction et inversement est envoyée à l'adaptateur d'enregistrement vidéotex (A) par l'intermédiaire de l'élément d'accouplement AV (A).

4. Installation vidéo domestique selon une ou plusieurs des revendications précédentes, caractérisée en ce que l'adaptateur d'enregistrement vidéotex (A) contient au moins un interrupteur (S), qui est commandé par le signal de suppression d'image et par le mélange de signaux de synchronisation et au moyen duquel l'information vidéotex ou en alternance l'information vidéotex et le signal complet d'image sont envoyés à l'enregistreur vidéo par l'intermédiaire de l'élément d'accouplement AV (K).

5. Installation vidéo domestique selon la revendication 4, caractérisée en ce que l'information vidéotex et le signal complet d'image sont envoyés à l'enregistreur vidéo respectivement par l'intermédiaire du premier interrupteur (S1) et d'un second interrupteur (S2), au moyen de l'élément d'accouplement AV (K), lorsque le premier interrupteur est ouvert et inversement.

6. Installation vidéo domestique selon une ou plusieurs des revendications 1 à 5, caractérisée en ce que l'adaptateur d'enregistrement vidéotex (A) contient un interrupteur (S3) qui est conducteur pendant le fonctionnement d'enregistrement et est ouvert pendant le fonctionnement de reproduction et contient un autre interrupteur (S4) qui est fermé pendant le fonctionnement de reproduction et est ouvert pendant le fonctionnement d'enregistrement, ces deux interrupteurs étant commandés par la tension de commutation AV.

7. Installation vidéo domestique selon une ou plusieurs des revendications 1 à 6, caractérisée en ce que l'adaptateur d'enregistrement vidéotex (A) et l'élément d'accouplement AV (K) forment une unité de construction.

# FIG. 1

# FIG. 3

FIG. 2